# FASCICULE DE BREVET EUROPEEN

(11) **EP 3 983 650 B1**
(45) Date de publication et mention de la délivrance du brevet: **06.12.2023**
(21) Numéro de dépôt: 20740362.7
(22) Date de dépôt: 01.06.2020
(51) Int. Cl.: F01D 5/18, F01D 9/04

(54) **TURBINE DE TURBOMACHINE À DISTRIBUTEUR EN CMC AVEC REPRISE D'EFFORT**
TURBOMASCHINENTURBINE MIT CMC-LEITSCHAUFEL MIT LASTVERTEILUNG
TURBOMACHINE TURBINE HAVING CMC NOZZLE WITH LOAD SPREADING

(30) Priorité: 12.06.2019 FR 1906244
(43) Date de publication de la demande: 20.04.2022
(73) Titulaire: SAFRAN AIRCRAFT ENGINES, 75015 Paris (FR)
(72) Inventeur: GAILLARD, Aurélien, 77550 MOISSY-CRAMAYEL (FR); DANIS, Antoine, Claude, Michel, Etienne, 77550 MOISSY-CRAMAYEL (FR); JARROSSAY, Clément, 77550 MOISSY-CRAMAYEL (FR); LEPRETRE, Gilles, Gérard, Claude, 77550 MOISSY-CRAMAYEL (FR); TABLEAU, Nicolas, Paul, 77550 MOISSY-CRAMAYEL (FR)
(74) Mandataire: Cabinet Beau de Loménie
(86) Numéro de dépôt international: PCT/FR2020/050928
(87) Numéro de publication internationale: WO 2020/249886

(56) Documents cités:
- EP-A1- 3 121 379
- EP-A1- 3 144 479
- FR-A1- 2 973 434
- US-A1- 2018 202 302

## Description

### Domaine Technique

L'invention concerne des turbomachines, notamment des turbomoteurs aéronautiques ou des turbines industrielles comprenant un distributeur de turbine en matériau composite à matrice céramique ou à matrice au moins partiellement en céramique, désigné ci-après par matériau CMC.

### Technique antérieure

Le domaine d'application de l'invention est notamment celui des moteurs aéronautiques à turbine à gaz. L'invention est toutefois applicable à d'autres turbomachines, par exemple des turbines industrielles.

L'amélioration des performances des turbomachines et la réduction de leurs émissions polluantes conduit à envisager des températures de fonctionnement de plus en plus élevées.

Pour des éléments de parties chaudes de turbomachines, il a donc été proposé d'utiliser des matériaux composites à matrice céramique noté CMC par la suite.

Les matériaux CMC sont typiquement formés d'un renfort fibreux en fibres réfractaires, telles que des fibres de carbone ou de céramique, densifié par une matrice en céramique ou au moins partiellement en céramique.

Ces matériaux possèdent des propriétés thermo-structurales remarquables, c'est-à-dire des propriétés mécaniques qui les rendent aptes à constituer des éléments de structure et la capacité à conserver ces propriétés à des températures élevées. De surcroît, les matériaux CMC ont une masse volumique bien inférieure à celle des matériaux métalliques utilisés traditionnellement pour des éléments de parties chaudes de turbomachines.

Ainsi, les documents WO 2010/061140, WO 2010/116066 et WO 2011 /080443 décrivent la réalisation d'aubes de roues mobiles de turbomachines en CMC à plateforme et talon intégrés. L'utilisation de matériaux CMC pour des distributeurs de turbine a aussi été proposée, notamment dans les documents WO 2010/146288, FR 2 979 662 et EP 2 443 318.

Un distributeur de turbine métallique traditionnel présente une forme de couronne composée de plusieurs secteurs assemblés, chaque secteur comprenant une plateforme intérieure, une plateforme extérieure et une pluralité de pales s'étendant entre les plateformes intérieure et extérieure et fixées à celles-ci. Les plateformes intérieures juxtaposées forment une virole intérieure et les plateformes extérieures juxtaposées forment une virole extérieure. Les viroles intérieure et extérieure délimitent la veine d'écoulement de gaz dans le distributeur.

Introduire un distributeur, par exemple un distributeur haute pression, en CMC permet d'augmenter la température maximale tolérée par rapport à un distributeur métallique, et ainsi de diminuer la quantité d'air de refroidissement utilisée. Cela permet ainsi d'augmenter les performances de la turbomachine.

Toutefois, le CMC, par ses propriétés très différentes du métal est plus sensible à certaines contraintes mécaniques. En effet le CMC présente une plus grande rigidité et une plus faible dilatation. Il se comporte mieux en compression, mais ses contraintes admissibles en traction sont plus faibles que celles du métal.

De plus, l'intégration dans un environnement métallique d'une pièce en CMC est délicate en raison des dilatations thermiques différentielles entre le CMC et le métal. Cela est d'autant plus délicat dans une turbomachine, et plus particulièrement dans une partie à haute pression de la turbomachine, car l'environnement est très chaud, ce qui exacerbe les différences de coefficients de dilatation thermique entre les matériaux, les efforts aérodynamiques subis par un distributeur haute pression étant en outre très élevés dans cette zone de turbine.

Il est connu des distributeurs en CMC comme par exemple un distributeur de turbine comportant une virole externe de support solidaire d'un carter, une virole interne de support, et une pluralité de secteurs de distributeurs en CMC formant une couronne s'étendant entre la virole externe de support et la virole interne de support. Chaque secteur de distributeur est en appui sur les viroles interne et externe de support et comporte une plateforme intérieure, une plateforme extérieure, et au moins une pale s'étendant entre la plateforme extérieure et la plateforme intérieure et fixée à celles-ci.

Toutefois, il existe un besoin d'améliorer les solutions connues en ce qui concerne le maintien déterministe du secteur de distributeur en CMC avec la virole interne, notamment en termes de maintien axial du secteur de distributeur et en termes de reprise des efforts aérodynamiques.

Par ailleurs, un important différentiel de pressions est exercé sur le carter sous le distributeur dans les directions radiale et axiale. Ce carter sert à créer une étanchéité entre le rotor et le stator. Cet écart de pression est source d'un effort qui, s'il était exercé sur le CMC, serait trop élevé compte tenu des admissibles du matériau.

Il est connu également, notamment du document FR 3 061 928, un distributeur tel que décrit ci-dessus et comportant en outre un mât de renforcement s'étendant radialement à l'intérieur des aubes entre les deux plateformes. Un autre exemple est divulgué dans le document EP-3144479.

Cependant, une telle solution reprend aussi bien via le mât les efforts relatifs au différentiel de pression sous le distributeur que les efforts aérodynamiques sur la couronne en CMC.

Il existe donc un besoin d'améliorer le maintien déterministe du distributeur en CMC de cette solution.

### Exposé de l'invention

L'invention vise à pallier les inconvénients mentionnés ci-dessus et à passer outre les difficultés mentionnées ci-dessus en proposant une turbine de turbomachine comprenant un distributeur de turbine au moins en partie en CMC dont le montage est simplifié et adapté pour maintenir ses secteurs de distributeur de façon déterministe tout en permettant aux secteurs de se déformer indépendamment des pièces métalliques en interface, et en garantissant une étanchéité satisfaisante.

Un objet de l'invention propose une turbine de turbomachine comprenant un carter, un distributeur annulaire définissant une direction axiale (D_{A}) et une direction radiale, une virole externe de support métallique solidaire du carter, une virole interne de support métallique. Le distributeur comprend une pluralité de secteurs de distributeur en matériau composite à matrice céramique formant une couronne s'étendant entre la virole externe de support et la virole interne de support. La virole externe de support définit une direction axiale et une direction radiale.

En outre, chaque secteur comporte un mât, une plateforme intérieure, une plateforme extérieure et au moins une pale s'étendant radialement entre les plateformes intérieure et extérieure et présentant un profil creux définissant un logement interne s'étendant radialement entre les deux plateformes. Les plateformes intérieure et extérieure de chaque secteur présentent chacune un orifice communiquant avec ledit logement interne de la pale. Le mât de chaque pale est fixé audit carter d'une part et en liaison avec ledit secteur distributeur d'autre part. Le mât traverse lesdits orifices des plateformes intérieure et extérieure, et ledit logement interne.

Selon une caractéristique générale de l'invention, la virole métallique externe comprend un orifice pour chaque mât, et pour chaque secteur, le mât traverse un des orifices de la virole métallique externe, et comprend au moins une saillie d'accrochage ayant au moins une portion s'étendant depuis une extrémité radialement externe dans une direction à l'opposé du centre du mât et dans, ou tangentiellement à, un plan orthogonal à la direction radiale, ladite au moins une saillie d'accrochage coopérant avec une face radialement externe de la virole externe de support.

La liaison ainsi réalisée par l'invention entre le mât et la virole de support externe permet de fortement augmenter l'étanchéité entre la veine définit par le distributeur annulaire en CMC et la zone radialement à l'extérieur de cette veine et ainsi d'améliorer les performances de la turbine.

Cette liaison à l'étanchéité améliorée permet également de supprimer de nombreuses zones d'interface.

De préférence, ladite au moins une saillie s'accrochage du mât comprend une seule portion s'étendant sur toute la circonférence du mât depuis une extrémité radialement externe du mât.

Selon un premier mode de réalisation de la turbine, la virole externe de support peut être réalisée en une seule pièce, c'est-à-dire être non sectorisée. Cela permet de monter le mât radialement depuis l'extérieur de la virole externe de support et de limiter au maximum les fuites qui seraient présentes dans le cas d'une virole sectorisée.

Selon un deuxième mode de réalisation de la turbine, ladite au moins une saillie d'accrochage du mât de chaque pale peut s'étendre dans un plan, et la face radialement externe de la virole externe de support peut comprendre une facette de réception d'une saillie d'accrochage pour chaque pale, chaque facette étant plane, c'est-à-dire s'étendant dans un plan défini par seulement deux directions non circulaires.

Les facettes réalisées pour chacune des pales permettent de présenter un contact plan/plan entre le mât et la virole, améliorant ainsi l'étanchéité entre les deux éléments facilitant le positionnement du mât. La virole est usinée de manière à présenter autant de « facettes » que de pales et donc que de mâts.

Selon un troisième mode de réalisation de la turbine, le mât est creux.

Le mât permet ainsi d'amener de l'air dans la cavité radialement à l'intérieur de la virole interne afin de la pressuriser et ainsi éviter que l'air circulant dans la veine s'étendant entre les plateformes internes et externes des secteurs de distributeur soit réintroduit hors de cette veine et ne réduise ainsi la performance et n'augmente le risque de surchauffe des pièces.

Selon un quatrième mode de réalisation de la turbine, la virole externe de support peut comprendre une extrémité amont et une extrémité aval selon la direction axiale, et un épaulement s'étendant dans la direction radiale depuis l'une des extrémités amont ou aval de la virole externe sur toute la circonférence de la virole externe de support, et le mât de chaque pale peut comprendre un appui d'anti-rotation du mât par rapport à la virole externe de support s'étendant en saillie dans la direction axiale depuis l'extrémité radialement externe du mât jusqu'à venir en appui dans la direction axiale contre l'épaulement de la virole externe de support.

L'appui du mât sur l'épaulement de la virole externe de support permet de maintenir le mât et ainsi la pale de toute rotation autour d'un axe radial.

Selon un cinquième mode de réalisation de la turbine, la virole externe de support peut comprendre en outre, pour chaque mât, un pion de centrage s'étendant en saillie radiale depuis ladite face radialement externe, et la saillie d'accrochage de chaque mât peut comprendre un orifice de centrage configuré pour coopérer avec un pion de centrage associé.

Le pion de centrage sur la virole externe de support et l'orifice de centrage prévu sur le mât, par exemple sur une saillie de centrage s'étendant depuis l'extrémité radiale externe du mât ou directement sur une ou la saillie d'accrochage, permet de fournir un premier point d'anti-rotation.

De préférence, le pion de centrage est prévu sur une portion aval de la virole externe de support par rapport au sens du flux gazeux destiné à traverser la veine définie par le distributeur annulaire en CMC.

Selon un sixième mode de réalisation de la turbine, la virole externe de support peut comprendre pour chaque mât des vis, et la saillie d'accrochage de chaque mât peut comprendre des orifices taraudés chacun configuré pour coopérer avec une vis associée.

Le mât peut comprendre au moins une portion en saillie dans la direction axiale en liaison avec la pale pour maintenir la pale en position.

De préférence, pour chaque secteur, les vis sont disposées en aval du mât et le pion de centrage est disposé en amont du mât.

Les orifices taraudés sont préférentiellement réalisés dans des oreilles prévues dans la saillie d'accrochage.

L'invention a également pour objet, une turbomachine comprenant une turbine de turbomachine telle que définie ci-dessus.

L'invention a aussi pour objet, un aéronef comprenant au moins une turbomachine telle que définie ci-dessus.

### Brève description des dessins

[Fig. 1] La figure 1 est une vue schématique en coupe d'un secteur d'une turbine selon un mode de réalisation de l'invention.
[Fig. 2] La figure 2 est une vue schématique assemblée d'une virole externe de support et un mât de la turbine de la figure 1.
[Fig. 3] La figure 3 représente une vue schématique éclatée d'une virole externe de support et un mât de la turbine de la figure 1.

### Description des modes de réalisation

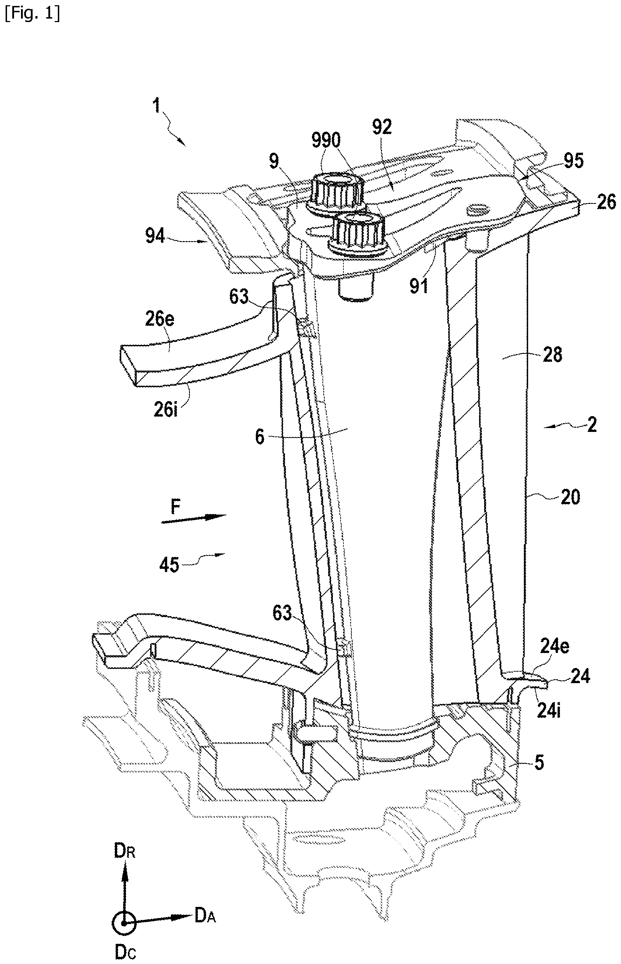

Sur la figure 1 est illustrée une vue schématique en coupe d'un secteur d'une turbine selon un mode de réalisation de l'invention.

Une turbine 1 haute pression d'une turbomachine, par exemple un turbomoteur aéronautique, telle que montrée partiellement sur la figure 1, comprend une pluralité de distributeurs fixes 2 qui alternent avec des roues mobiles dans le sens d'écoulement du flux gazeux F, indiqué par une flèche sur la figure 1, dans la turbine 1 et qui sont montés dans un carter de turbine.

Chaque roue mobile comprend une pluralité d'aubes ayant une virole intérieure, et au moins une pale s'étendant depuis la virole intérieure et liée à celle-ci. Du côté intérieur de la virole intérieure, l'aube se prolonge par un pied engagé dans un logement d'un disque. Du côté extérieur, le sommet des aubes est en regard d'un matériau abradable porté par un anneau pour assurer l'étanchéité aux sommets des aubes.

Dans tout le présent texte, les termes « intérieur » ou « interne » et « extérieur » ou « externe » sont utilisés en référence à la position ou l'orientation par rapport à l'axe de rotation de la turbine 1 qui définit la direction axiale D_{A} de la turbine 1.

Les aubes de la roue mobile peuvent être des aubes métalliques traditionnelles ou des aubes en matériau CMC obtenues par exemple comme décrit dans les documents WO 2010/061140, WO 2010/116066, WO 2011/080443.

Au moins l'un des distributeurs 2 de la turbine 1 est formé par réunion de plusieurs secteurs de distributeurs 20 annulaires en matériau CMC pour former un anneau complet. La flèche D_{A} indique la direction axiale du distributeur 2 tandis que la flèche D_{R} indique la direction radiale du distributeur 2 et le repère D_{C} indique la direction circonférentielle.

Chaque secteur 20 de distributeur du distributeur 2 comprend une plateforme intérieure 24, une plateforme extérieure 26 et une pale 28 s'étendant entre les plateformes intérieure et extérieure 24 et 26 et fixée à celles-ci. En variante, plusieurs pales pourraient s'étendre entre les plateformes intérieure et extérieure d'un même secteur de distributeur. Une fois assemblés avec le carter de la turbine 1, les secteurs 20 forment une unique couronne de distributeurs 2 présentant une virole intérieure formée par la juxtaposition des plateformes intérieures 24 des secteurs 20 et une virole extérieure formée par la juxtaposition des plateformes extérieures 26 des secteurs 20.

La virole intérieure et la virole extérieure forment entre elles une veine 45 d'écoulement de fluide à l'intérieur de laquelle le flux gazeux F s'écoule lors du fonctionnement de la turbine 1.

Dans tout le texte, les termes « amont » et « aval » sont utilisés en référence au sens d'écoulement du flux gazeux F dans la veine 45 indiqué par une flèche.

Les plateformes intérieures 24 présentent chacune une surface extérieure 24e destinée à être en contact avec le flux gazeux F, et donc disposée radialement en regard des plateformes extérieures 26 formant la virole extérieure. Les plateformes intérieures 24 présentent en outre une surface intérieure 24i disposée en regard de l'axe de rotation de la turbine 1.

Les plateformes extérieures 26 présentent chacune une surface extérieure 26e disposée en regard du carter et formée par la surface de la seconde portion 262 des plateformes extérieures 26 orientée radialement vers l'extérieure. Les plateformes extérieures 26 présentent en outre une surface intérieure 26i destinée à être en contact avec le flux gazeux F, et donc disposée radialement en regard des plateformes intérieures 24 formant la virole intérieure et en regard de l'axe de rotation de la turbine 1.

Le distributeur 2 est maintenu entre une virole métallique interne 5 et une virole métallique externe 9 entre lesquelles s'étend la couronne formée par l'assemblage des secteurs d'anneau 20 du distributeur 2. La virole métallique externe 9 est solidaire du carter et présente une surface intérieure 91 et une surface extérieure 92 selon la direction radiale D_{R}.

Comme cela est illustré sur la figure 1, chaque pale 28 possède un profil creux présentant un logement intérieur 280 s'étendant sur toute la hauteur de la pale 28, c'est-à-dire entre la plateforme intérieure 24 et la plateforme extérieure 26 du secteur d'anneau 20. La plateforme intérieure 24 de chaque secteur de distributeur 20 comprend un orifice 245 dont la forme correspond à la section du logement intérieur 280 dans le plan dans lequel s'étend la plateforme intérieure 24. De même, la plateforme extérieure 26 de chaque secteur de distributeur 20 comprend un orifice 265 dont la forme correspond à la section du logement intérieur 280 dans le plan dans lequel s'étend la plateforme intérieure 26. Les orifices 245 et 265 des plateformes intérieure 24 et extérieure 26 sont réalisés dans le prolongement du logement intérieur 280 de la pale 28.

Le logement intérieur 280 de la pale 28 et les orifices 245 et 265 des plateformes intérieure 24 et extérieure 26 peuvent être raccordés à un système de refroidissement délivrant un flux d'air de refroidissement depuis le carter jusque dans la pale 28 et les plateformes intérieure 24 et extérieure 26.

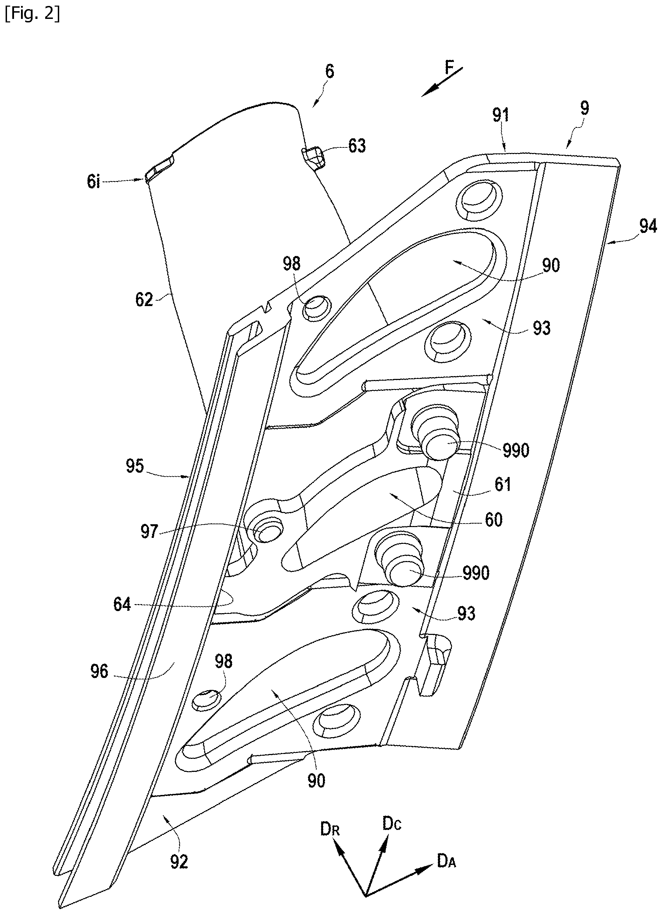

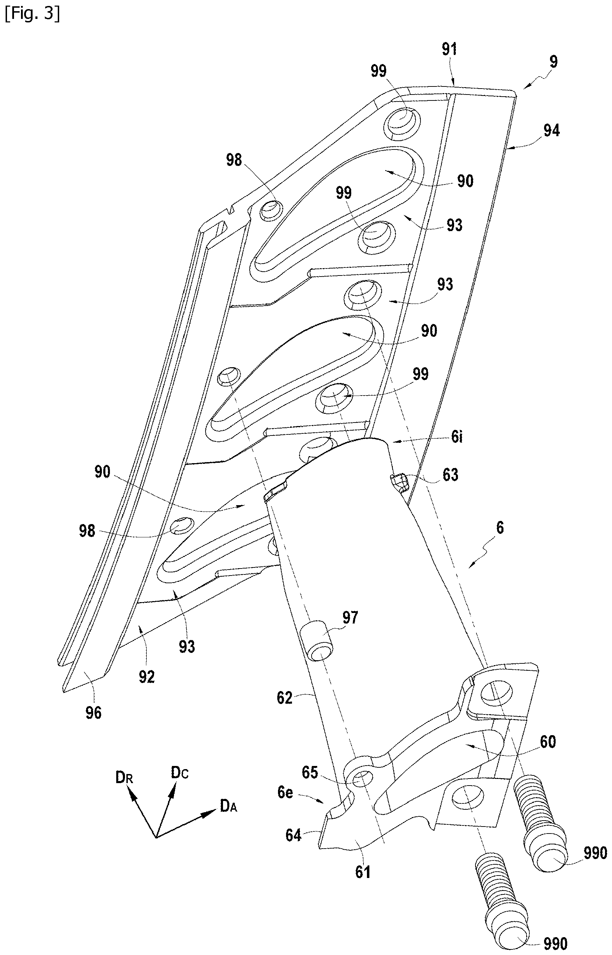

Comme cela est illustré sur les figures 2 et 3 qui présentent deux vues schématiques d'une virole externe de support 9 et d'un mât 6 de la turbine 1 de la figure, la turbine 1 comprend en outre, pour chaque secteur de distributeur 20, un mât 6 s'étendant dans la direction radiale D_{R}. 1. Sur la figure 2, la virole métallique externe 9 et le mât 6 sont assemblés, et sur la figure 3, la virole métallique externe 9 et le mât 6 sont éclatés.

Comme cela est illustré, le mât 6 comprend une tête de mât 61 en appui sur la surface extérieure 92 de la virole métallique externe 9, et une tige 62 s'étendant en saillie depuis la tête 61 dans la direction radiale D_{R} vers l'intérieur et configurée pour traverser la virole métallique externe 9, le logement intérieur 280 de la pale 28 et les orifices 245 et 265 des plateformes intérieure 24 et extérieure 26 étant alignés avec le logement intérieur 280 de la pale 28.

En d'autres termes, le mât 6 comprend une première extrémité 6i radialement interne et une seconde extrémité 6e radialement externe, un corps 62 s'étendant sensiblement selon la direction radiale D_{R} entre les première et seconde extrémités 6i et 6e du mât 6, et une tête de mât 61 s'étendant en saillie dans un plan orthogonal à la direction radiale D_{R} depuis la seconde extrémité 6e du mât 6. La tête de mât 61 forme un appui plan s'étendant dans un plan orthogonal à la direction radiale D_{R}.

Le mât 6 est creux pour amener de l'air dans la cavité radialement à l'intérieur de la virole interne afin de la pressuriser et ainsi éviter que l'air circulant dans la veine s'étendant entre les plateformes internes et externes des secteurs distributeur soit réintroduit hors de cette veine et ne réduise ainsi la performance et n'augmente le risque de surchauffe des pièces. Le mât 6 comprend ainsi un logement interne 60 s'étendant dans la direction radiale D_{R} entre les première et seconde extrémités 6i et 6e du mât 6.

La virole métallique externe 9 comprend des orifices 90 de réception du mât 6 conformés pour être traversés par un mât 6, et des facettes 93 planes pour recevoir chacune une tête de mât 61 en appui.

La virole métallique externe 9 comprend une extrémité amont 94 et une extrémité aval 95 selon la direction axiale D_{A}. Sur son extrémité aval 95, la virole métallique externe 9 comprend un épaulement 96 s'étendant dans la direction radiale D_{R} sur toute la circonférence de la virole métallique externe 9. La virole métallique externe 9 comprend en outre, pour chaque pale 28, et donc pour chaque mât 6, un pion de centrage 97 s'insérant dans un orifice 98 prévu dans la virole métallique externe 9. Lorsque le pion de centrage 97 est inséré dans l'orifice 98, le pion 97 s'étend en saillie dans la direction radiale D_{R} depuis la face radialement externe 92 de la virole métallique externe 9. Les pions de centrage 97 sont disposés, dans ce mode de réalisation, sur une portion aval de la virole métallique externe 9, c'est-à-dire à proximité de l'extrémité aval 95 de la virole métallique externe 9, entre l'épaulement 96 et l'extrémité amont 94.

L'extrémité aval 95 de la virole métallique externe 9 forme un crochet ouvert vers l'aval pour la fixation de la virole métallique externe 9 au carter.

La tête de mât 61 comprend un appui d'anti-rotation 64 s'étendant dans la direction circonférentielle D_{C} venant en appui dans la direction axiale D_{A} contre l'épaulement 96 de la virole métallique externe 9 pour maintenir le mât 6 et ainsi la pale 28 avec laquelle le mât 6 coopère de toute rotation autour d'un axe radial. Chaque mât 6 comprend en outre un orifice de centrage 65 conformé pour coopérer avec un des pions de centrage 97 de la virole métallique externe 9.

Dans le mode de réalisation illustré, la virole métallique externe 9 comprend en outre, pour chaque mât 6, des orifices taraudés 99 sur une portion amont et chaque mât 6 comprend des orifices de fixation amont 66 configurés pour se superposer aux orifices taraudés 99 de la virole métallique externe 9 lorsque le mât 6 est monté sur la virole métallique externe 9. La virole métallique externe 9 comprend des vis 990 traversant chacune un orifice de fixation amont 66 du mât 6 et un orifice taraudé pour fixer le mât 6 à la virole métallique externe 9. Les vis 990 sont associées à des moyens de maintien en position radiale pour maintenir une portion du mât 6 sur une portion amont de la virole métallique externe 9.

Pour maintenir la pale 28 en position, le mât 6 comprend en outre deux portions en saillie 63 s'étendant dans un plan transverse à la direction radiale D_{R}. Dans le mode de réalisation illustré sur les figures 1 à 3, une première portion en saillie 63 forme un premier appui à une première position radiale et une seconde portion en saillie 63 forme un second appui à une seconde position radiale. La première position radiale est située radialement à l'intérieure de la seconde position radiale, c'est-à-dire entre le centre de révolution de la turbine 1 et la seconde position radiale.

Le premier et le second appuis forment deux ergots s'étendant sensiblement selon la direction axiale D_{A} sur une portion du mât 6 destinée à être dans le logement intérieur 280 de la pale 28. Les deux portions en saillie 63 du mât 6 forment chacune une excroissance dont au moins une partie est en contact avec la pale 28 pour maintenir la pale 28 en position.

En outre, la virole interne de support 5 comprend des orifices configurés pour recevoir les mâts 6. Le mât 6 permet de fournir un moyen de fixation du secteur 20 de distributeur en CMC par le haut, c'est-à-dire au carter, tout en minimisant le moment de flexion, dans la mesure où la longueur de flexion est diminuée de moitié environ de par le mât 6 traversant le secteur de distributeur. Chaque secteur 20 de distributeur est ainsi maintenu de façon déterministe, c'est-à-dire de manière à éviter que le secteur de distributeur 20 se mette à vibrer et en maîtrisant sa position, et cela tout en permettant au secteur de distributeur 20 de se déformer sous les effets de la température et de la pression entre autre indépendamment des pièces métalliques en interface.

Dans le cas où chaque secteur de distributeur comprenait plusieurs pales, la turbine comprendrait, au plus, un nombre de mâts correspondant pour chaque secteur de distributeur.

Dans une variante, la tête de mât 61 peut comprendre une pluralité de saillies s'étendant depuis la seconde extrémité 6e du mât 6, certaines d'entre elles comprenant au moins l'un des éléments pour le maintien ou le centrage du mât 6.

La turbine de turbomachine selon l'invention comprend un distributeur de turbine au moins en partie en CMC dont le montage est simplifié et adapté pour maintenir ses secteurs de distributeur de façon déterministe tout en permettant aux secteurs de se déformer indépendamment des pièces métalliques en interface, et en améliorant l'étanchéité entre le mât et la virole métallique externe.

## Revendications

1. Turbine (1) de turbomachine comprenant un carter, un distributeur (2) annulaire définissant une direction axiale (D_{A}) et une direction radiale (D_{R}), une virole externe de support (9) en métal solidaire du carter et une virole interne de support (5) en métal, le distributeur (2) comprenant une pluralité de secteurs (20) de distributeur en matériau composite à matrice céramique formant une couronne s'étendant entre la virole externe de support (9) et la virole interne de support (5),
chaque secteur (20) comportant un mât (6), une plateforme intérieure (24), une plateforme extérieure (26) et au moins une pale (28) s'étendant radialement entre les plateformes intérieure et extérieure (24, 26) et présentant un profil creux définissant un logement interne (280) s'étendant radialement, les plateformes intérieure et extérieure (24, 26) présentant chacune un orifice (245, 265) communiquant avec ledit logement interne (280) de la pale (28), et le mât (6) traversant lesdits orifices (245, 265) des plateformes intérieure et extérieure (24, 26) et ledit logement interne (280), **caractérisée en ce que** la virole métallique externe (9) comprend un orifice (90) pour chaque mât (6), et pour chaque secteur (20), le mât (6) traverse un des orifices (90) de la virole métallique externe (9), et comprend au moins une saillie d'accrochage (61) à la virole externe de support (9) ayant au moins une portion s'étendant depuis une extrémité radialement externe (6e) du mât (6) dans une direction à l'opposé du centre du mât (6) et dans un plan orthogonal à la direction radiale (D_{R}), ladite au moins une saillie d'accrochage (61) coopérant avec une face radialement externe (92) de la virole externe de support (9).

2. Turbine (1) selon la revendication 1, dans laquelle la virole externe de support (9) est en une seule pièce.

3. Turbine (1) selon la revendication 1 ou 2, dans laquelle ladite au moins une saillie d'accrochage (61) du mât (6) de chaque pale (28) s'étend dans un plan, et la face radialement externe (92) de la virole externe de support (9) comprend une facette (93) de réception d'une saillie d'accrochage (61) pour chaque pale (28), chaque facette (93) étant plane.

4. Turbine (1) selon l'une quelconque des revendications 1 à 3, dans laquelle le mât (6) est creux.

5. Turbine (1) selon l'une des revendications 1 à 4, dans laquelle la virole externe de support (9) comprend une extrémité amont (94) et une extrémité aval (95) selon la direction axiale (D_{A}), et un épaulement (96) s'étendant dans la direction radiale (D_{R}) à l'une des extrémités amont ou aval (94, 95) de la virole externe (9) sur toute la circonférence de la virole externe de support (9), et le mât (6) de chaque pale (28) comprend un appui (64) d'anti-rotation du mât (6) par rapport à la virole externe de support (9) s'étendant en saillie dans la direction axiale (D_{A}) depuis l'extrémité radialement externe du mât (6) jusqu'à être en appui dans la direction axiale (D_{A}) contre l'épaulement (96) de la virole externe de support (9).

6. Turbine (1) selon l'une des revendications 1 à 5, dans laquelle la virole externe de support (9) comprend en outre, pour chaque mât (6), un pion de centrage (97) s'étendant en saillie radiale depuis ladite face radialement externe (92), et la saillie d'accrochage (61) de chaque mât (6) comprend un orifice de centrage (65) configuré pour coopérer avec un pion de centrage (97) associé.

7. Turbine (1) selon l'une des revendications 1 à 6, dans laquelle la virole externe de support (9) comprend pour chaque mât (6) des vis (990), et la saillie d'accrochage (61) de chaque mât comprend des orifices taraudés (99) chacun configuré pour coopérer avec une vis (990) associée.

8. Turbine (1) selon les revendications 6 et 7 en combinaison, dans laquelle, pour chaque secteur (20), les vis (990) sont disposées en aval du mât (6) et le pion de centrage (97) est disposé en amont du mât (6).

9. Turbine selon l'une des revendications 7 ou 8, dans laquelle les orifices taraudés (99) sont réalisés dans des oreilles prévues dans la saillie d'accrochage (61).

10. Turbomachine comprenant une turbine (1) selon l'une des revendications 1 à 9.

11. Aéronef comprenant au moins une turbomachine selon la revendication 10.

## Patentansprüche

1. Turbomaschinenturbine (1), die ein Gehäuse, eine ringförmige Leitschaufel (2), die eine axiale Richtung (D_{A}) und eine radiale Richtung (D_{R}) definiert, einen äußeren Trägerring (9) aus Metall, der fest mit dem Gehäuse verbunden ist, und einen inneren Trägerring (5) aus Metall umfasst, wobei die Leitschaufel (2) mehrere Leitschaufelsektoren (20) aus Verbundmaterial mit Keramikmatrix umfasst, die einen Kranz bilden, der sich zwischen dem äußeren Trägerring (9) und dem inneren Trägerring (5) erstreckt,
wobei jeder Sektor (20) eine Strebe (6), eine innere Plattform (24), eine äußere Plattform (26) und mindestens ein Blatt (28) beinhaltet, das sich radial zwischen der inneren und der äußeren Plattform (24, 26) erstreckt und ein hohles Profil aufweist, das eine innere Aufnahme (280) definiert, die sich radial erstreckt, wobei die innere und die äußere Plattform (24, 26) jeweils eine Öffnung (245, 265) aufweisen, die mit der inneren Aufnahme (280) des Blattes (28) verbunden ist, und die Strebe (6) die Öffnungen (245, 265) der inneren und der äußeren Plattform (24, 26) und die innere Aufnahme (280) durchquert, **dadurch gekennzeichnet, dass** der äußere metallische Ring (9) eine Öffnung (90) für jede Strebe (6) aufweist, und die Strebe (6) für jeden Sektor (20) eine der Öffnungen (90) des äußeren metallischen Rings (9) durchquert und mindestens einen Vorsprung (61) zur Verankerung an dem äußeren Trägerring (9) umfasst, der mindestens einen Abschnitt aufweist, der sich von dem radial äußeren Ende (6e) der Strebe (6) in eine Richtung entgegengesetzt zur Mitte der Strebe (6) und in einer Ebene orthogonal zur radialen Richtung (D_{A}) erstreckt, wobei der mindestens eine Verankerungsvorsprung (61) mit einer radial äußeren Seite (92) des äußeren Trägerrings (9) zusammenwirkt.

2. Turbine (1) nach Anspruch 1, wobei der äußere Trägerring (9) einteilig ist.

3. Turbine (1) nach Anspruch 1 oder 2, wobei der mindestens eine Verankerungsvorsprung (61) der Strebe (6) von jedem Blatt (28) sich in einer Ebene erstreckt und die radial äußere Seite (92) des äußeren Trägerrings (9) eine Facette (93) zur Aufnahme eines Verankerungsvorsprungs (61) für jedes Blatt (28) umfasst, wobei jede Facette (93) eben ist.

4. Turbine (1) nach einem der Ansprüche 1 bis 3, wobei die Strebe (6) hohl ist.

5. Turbine (1) nach einem der Ansprüche 1 bis 4, wobei der äußere Trägerring (9) ein vorgelagertes Ende (94) und ein nachgelagertes Ende (95) entlang der axialen Richtung (D_{A}) und eine Schulter (96) umfasst, die sich in der radialen Richtung (D_{R}) an einem von dem vorgelagerten oder dem nachgelagerten Ende (94, 95) des äußeren Rings (9) über den gesamten Umfang des äußeren Trägerrings (9) erstreckt, und die Strebe (6) von jedem Blatt (28) eine Drehsicherungsauflage (64) der Strebe (6) in Bezug auf den äußeren Trägerring (9) umfasst, die sich in der axialen Richtung (D_{A}) vom radial äußeren Ende der Strebe (6) hervorstehend erstreckt, bis sie in der axialen Richtung (D_{A}) gegen die Schulter (96) des äußeren Trägerrings (9) aufliegt.

6. Turbine (1) nach einem der Ansprüche 1 bis 5, wobei der äußere Trägerring (9) ferner für jede Strebe (6) einen Zentrierstift (97) umfasst, der sich von der radial äußeren Seite (92) radial hervorstehend erstreckt, und der Verankerungsvorsprung (61) von jeder Strebe (6) eine Zentrieröffnung (65) umfasst, die dazu ausgestaltet ist, mit einem zugehörigen Zentrierstift (97) zusammenzuwirken.

7. Turbine (1) nach einem der Ansprüche 1 bis 6, wobei der äußere Trägerring (9) für jede Strebe (6) Schrauben (990) umfasst und der Verankerungsvorsprung (61) von jeder Strebe Gewindeöffnungen (99) umfasst, die jeweils dazu ausgestaltet sind, mit einer zugehörigen Schraube (990) zusammenzuwirken.

8. Turbine (1) nach Anspruch 6 und 7 in Kombination, wobei für jeden Sektor (20) die Schrauben (990) der Strebe (6) nachgelagert angeordnet sind und der Zentrierstift (97) der Strebe (6) vorgelagert angeordnet ist.

9. Turbine nach einem der Ansprüche 7 oder 8, wobei die Gewindeöffnungen (99) in Ösen hergestellt sind, die in dem Verankerungsvorsprung (61) vorgesehen sind.

10. Turbomaschine, die eine Turbine (1) nach einem der Ansprüche 1 bis 9 umfasst.

11. Luftfahrzeug, das mindestens eine Turbomaschine nach Anspruch 10 umfasst.

## Claims

1. A turbomachine turbine (1) comprising a casing, an annular nozzle (2) defining an axial direction (D_{A}) and a radial direction (D_{R}), an outer support shroud (9) of metal integral with the casing and an inner support shroud (5) of metal, the nozzle (2) comprising a plurality of nozzle sectors (20) of ceramic matrix composite material forming a ring extending between the outer support shroud (9) and the inner support shroud (5),
each sector (20) including a mast (6), an inner platform (24), an outer platform (26) and at least one airfoil (28) extending radially between the inner and outer platforms (24, 26) and having a hollow profile defining an inner recess (280) extending radially, the inner and outer platforms (24, 26) each having an opening (245, 265) communicating with said inner recess (280) of the airfoil (28), and the mast (6) passing through said openings (245, 265) of the inner and outer platforms (24, 26), said inner recess (280),
**characterized in that** the metal outer shroud (9) comprises an opening (90) for each mast (6), and for each sector (20) the mast (6) passes through one of the openings (90) of the metal outer shroud (9), and comprises at least one projection (61) for fastening to the outer support shroud (9) having at least one portion extending from a radially outer end (6e) of the mast (6) in a direction opposite to the center of the mast (6) and in a plane orthogonal to the radial direction (D_{R}), said at least one fastening projection (61) cooperating with a radially outer face (92) of the outer support shroud (9).

2. The turbine (1) according to claim 1, wherein the outer support shroud (9) is a single piece.

3. The turbine (1) according to claim 1 or 2, wherein said at least one fastening projection (61) of the mast (6) of each airfoil (28) extends in a plane, and the radially outer face (92) of the outer support shroud (9) comprises a facet (93) for receiving a fastening projection (61) for each airfoil (28), each facet (93) being planar.

4. The turbine (1) according to any one of claims 1 to 3, wherein the mast (6) is hollow.

5. The turbine (1) according to one of claims 1 to 4, wherein the outer support shroud (9) comprises an upstream end (94) and a downstream end (95) in the axial direction (D_{A}), and a shoulder (96) extending in the radial direction (D_{R}) at one of the upstream or downstream ends (94, 95) of the outer shroud (9) over the entire circumference of the outer support shroud (9), and the mast (6) of each airfoil (28) comprises an anti-rotation support (64) of the mast (6) relative to the outer support shroud (9) protruding in the axial direction (D_{A}) from the radially outer end of the mast (6) until it is supported in the axial direction (D_{A}) against the shoulder (96) of the outer support shroud (9).

6. The turbine (1) according to one of claims 1 to 5, wherein the outer support shroud (9) also comprises, for each mast (6), a centering pin (97) protruding radially from said radially outer face (92), and the fastening projection (61) of each mast (6) comprises a centering opening (65) configured to cooperate with an associated centering pin (97).

7. The turbine (1) according to one of claims 1 to 6, wherein the outer support shroud (9) comprises, for each mast (6), screws (990) and the fastening projection (61) of each mast comprises tapped openings (99), each configured to cooperate with an associated screw (990).

8. Turbine (1) according to claims 6 and 7 in combination, wherein, for each sector (20), the screws (990) are arranged downstream of the mast (6) and the centering pin (97) is arranged upstream of the mast (6).

9. The turbine according to one of claims 7 or 8, wherein the tapped openings (99) are made in lugs provided in the fastening projection (61).

10. A turbomachine comprising a turbine (1) according to one of claims 1 to 9.

11. An aircraft comprising at least one turbomachine according to claim 10.
